Europäisches Patentamt

European Patent Office

Office européen des brevets

(19)

(11) Numéro de publication : **0 488 848 A1**

(12) **DEMANDE DE BREVET EUROPEEN**

(21) Numéro de dépôt : **91403046.5**

(22) Date de dépôt : **14.11.91**

(51) Int. Cl.⁵ : **F16B 39/38**

(30) Priorité : **29.11.90 FR 9014955**

(43) Date de publication de la demande :
**03.06.92 Bulletin 92/23**

(84) Etats contractants désignés :
**DE ES FR GB IT NL SE**

(71) Demandeur : **SHUR-LOK INTERNATIONAL S.A.**
**Parc Industriel de et à**
**B-4822 Petit-Rechain (BE)**

(72) Inventeur : **Bruyere, René**
**Route de Housse 81**
**B-4671 Blegny (BE)**

(74) Mandataire : **Polus, Camille et al**
**c/o Cabinet Lavoix 2, Place d'Estienne d'Orves**
**F-75441 Paris Cedex 09 (FR)**

(54) **Ecrou auto-freiné.**

(57) L'écrou auto-freiné (2) selon l'invention comporte un corps d'écrou (4) ayant une forme générale de révolution, muni intérieurement d'un filetage (6) comportant au moins un filet et extérieurement de moyens de mise en rotation de l'écrou (10, 12), et des moyens de freinage. Les moyens de freinage comprennent un élément de freinage (14) délimitant un filetage auxiliaire (18) coaxial au filetage (6) du corps d'écrou (4), ayant le même nombre de filets et sensiblement le même pas et le même diamètre nominal que celui-ci, et des moyens de liaison (16) élastiquement déformables dans une direction axiale entre l'élément de freinage (14) et le corps d'écrou (4), l'agencement étant tel qu'au repos le prolongement fictif du filetage (6) de corps d'écrou (4) vers le filetage auxiliaire (18) est décalé axialement par rapport à ce dernier, d'une distance (d) différente du quotient du pas des filetages par le nombre de filets de ceux-ci.

FIG.1

EP 0 488 848 A1

La présente invention concerne les écrous auto-freinés. De tels écrous comportent généralement un corps d'écrou ayant une forme générale de révolution, muni intérieurement d'un filetage comportant au moins un filet et extérieurement de moyens de mise en rotation de l'écrou, et des moyens de freinage.

Les écrous auto-freinés ont pour fonction de créer un couple de freinage lors du vissage ou du dévissage sur une vis ou un arbre fileté, avant que la face d'appui de l'écrou n'entre en contact avec la pièce à maintenir en place.

Le couple de freinage doit être suffisant pour que l'écrou vissé ne puisse pas se dévisser sous l'effet des vibrations. Un tel couple de freinage est défini par des normes internationales en fonction des caractéristiques du filetage.

Par ailleurs un écrou auto-freiné doit pouvoir être utilisé plusieurs fois tout en produisant à chaque utilisation un couple de freinage suffisant. Le nombre d'utilisations que l'écrou doit pouvoir subir est également défini par des normes internationales.

Dans un premier type connu d'écrou auto-freiné, le filetage est déformé localement de manière à prendre une forme elliptique. A cet effet, des coups sont appliqués sur une partie longitudinale de la surface extérieure des écrous, de manière à obtenir une déformation plastique de l'écrou.

Cette déformation plastique est difficile à contrôler et le-couple de freinage obtenu est imprécis. De plus, de tels écrous manquent d'élasticité et supportent-mal les vissages-et dévissages-répétés.

Dans un deuxième type connu d'écrou auto-freiné, la partie arrière de, l'écrou est fraisée radialement pour délimiter desencoches servant éventuellement de moyens de mise en rotation de l'écrou. Les pattes ainsi formées entre les encoches peuvent être déformées radialement, le filetage ayant ainsi un profil conique en section axiale pour produire l'effet de freinage.

Avec cette technique, il est nécessaire de pratiquer un ébavurage soigné après fraisage pour éviter un grippage de l'écrou sur la vis, ce qui accroît le coût de l'écrou.

De plus, comme dans le premier type d'écrou décrit ci-dessus, il est difficile d'obtenir un couple de freinage précis.

Dans un troisième type connu d'écrou auto-freiné, on insère une bague en matière plastique dans un alésage de l'écrou qui est situé vers l'arrière de celui-ci. La bague possède un diamètre intérieur plus petit que le diamètre extérieur du filetage pour produire le couple de freinage.

Il s'avère que la solidarisation de la bague dans l'écrou est souvent insuffisante et qu'un phénomène de fluage de la matière plastique limite l'emploi de ce type d'écrous, quine conviennent que pour une utilisation à faible température.

Pour remédier à ces inconvénients, la présente invention a pour but de fournir un écrou auto-freiné pouvant être utilisé dans une large gamme de température et engendrant un couple de freinage précis, tout en étant facile à réaliser pour réduire son coût, d'encombrement axial et de poids réduits.

Un écrou selon l'invention peut être utilisé avec une partie filetée mâle de longueur réduite, ce qui en diminue le poids ; ce qui est un avantage particulièrement apprécié en aéronautique.

A cet effet, l'invention a pour objet un écrou auto-freiné comportant un corps d'écrou ayant une forme générale de révolution, muni intérieurement d'un filetage comportant au moins un filet et extérieurement de moyens de mise en rotation de l'écrou, et des moyens de freinage, caractérisé en ce que les moyens de freinage comprennent un élément de freinage délimitant un filetage auxiliaire coaxial au filetage du corps d'écrou, ayant le même nombre de filets et sensiblement le même pas et le même diamètre nominal que celui-ci, et des moyens de liaison élastiquement déformables dans une direction axiale entre l'élément de freinage et le corps d'écrou, l'agencement étant tel qu'au repos le prolongement fictif du filetage de corps d'écrou vers le filetage auxiliaire est décalé axialement par rapport à ce dernier d'une distance différente du quotient du pas des filetages par le nombre de filets de ceux-ci.

Selon d'autres caractéristiques :
– l'élément de freinage est un élément annulaire;
– les moyens de liaison comportent un voile dont une partie possède une composante radiale ;
– le voile comporte une partie axiale et une partie radiale ;
– le corps d'écrou, les moyens de liaison et l'élément de freinage sont venus de matière.

La présente invention sera mieux comprise à la lecture de la description détaillée qui va suivre, faite à titre d'exemple en référence aux dessins annexés sur lesquels :
– La figure 1 est une vue latérale avec coupe partielle d'un écrou auto-freiné selon l'invention ;
– la figure 2 est une vue en élévation de l'écrou de la figure 1 montrant la face de serrage de l'écrou ;
– la figure 3 est une vue schématique de la position relative du filetage du corps d'écrou et du filetage auxiliaire.

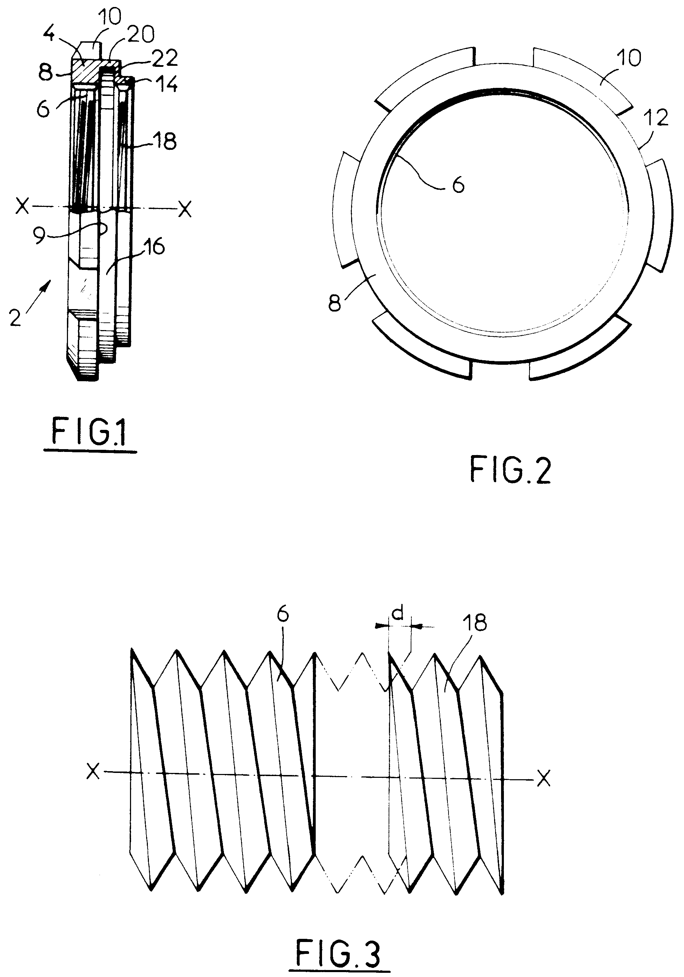

Sur la figure 1 on a représenté un écrou 2 selon l'invention comportant un corps d'écrou 4 ayant une forme générale de révolution autour d'un axe X-X et muni intérieurement d'un filetage 6 comportant un filet unique.

Il est à noter que le filetage 6 pourrait, en variante, comporter plusieurs filets.

Le corps d'écrou 4 comporte une face avant plane 8 destinée à être serrée contre une pièce à fixer (non représentée) et une face d'extrémité arrière 9 également plane.

Le corps d'écrou 4 comporte sur sa surface extérieure des moyens de mise en rotation de l'écrou constitués par des nervures 10 s'étendant axialement, réparties à la périphérie du corps 4 et séparées entre elles par des rainures 12 (voir également figure 2).

Les moyens de mise en rotation de l'écrou pourraient, en variante, être constitués par des faces extérieures du type à six pans ou par tout autre moyen.

L'écrou 2 comporte également un élément de freinage 14 espacé vers l'arrière du corps d'écrou 4 et relié à ce dernier par des moyens de liaison 16 élastiquement déformables dans la direction de l'axe X-X.

L'élément de freinage 14 est un élément annulaire comportant intérieurement un filetage auxiliaire 18 coaxial au filetage 6.

Le filetage auxiliaire 18 possède les mêmes caractéristiques que le filetage 6 c'est-à-dire le même pas, le même diamètre nominal et le même profil de filet.

Le diamètre extérieur de l'élément de freinage 14 est plus petit que le diamètre extérieur du corps d'écrou 4, délimité par le fond des rainures 12.

Les moyens de liaison 16 relient la zone d'extrémité avant de la périphérie extérieure de l'élément de freinage 14 à la périphérie extérieure de la face d'extrémité arrière 9 du corps 4.

Les moyens de liaison 16 sont constitués d'un voile comportant une première paroi cylindrique 20 d'axe X-X dont le diamètre extérieur est sensiblement égal au diamètre extérieur du corps 4 et dont le diamètre intérieur est plus grand que le diamètre extérieur de l'élément de freinage 14.

Le voile comporte une seconde paroi 22 annulaire s'étendant radialement pour relier l'extrémité arrière de la première paroi 20 à l'extrémité avant de la surface extérieure cylindrique de l'élément de freinage 14.

L'agencement de l'ensemble formé de l'élément de freinage et des moyens de liaison 16 est tel que le prolongement fictif du filetage 6 du corps d'écrou (en traits interrompus sur la figure 3) vers le filetage auxiliaire 18 est, par rapport à ce dernier, décalé axialement d'une distance $\underline{d}$ de décalage (voir figure 3) différente du pas des filetages.

Il est à noter que dans le cas où les filetages comportent plusieurs filets, la distance $\underline{d}$ doit être différente du quotient du pas des filetages par le nombre de filets de ceux-ci.

Dans le mode de réalisation représenté sur les figures 1 et 2, le décalage $\underline{d}$ est obtenu par un choix judicieux de la dimension axiale de la première paroi 20.

Avec un tel agencement, lorsqu'on visse le corps d'écrou 4 sur une vis (non représentée), l'extrémité de celle-ci vient en appui contre le filet du filetage auxiliaire 18 mais ne peut être reçue par vissage du fait de l'existence du décalage $\underline{d}$. En poursuivant le vissage du corps d'écrou 4 sur la vis, l'extrémité de celle-ci exerce une force dirigée vers l'arrière sur l'élément 14, ce qui entraîne la déformation élastique axiale des moyens de liaison 16 vers l'arrière, provoquant un déplacement axial vers l'arrière de l'élément de freinage 14, par rapport au corps 4.

Lorsque ce déplacement axial vers l'arrière correspond à la distance $\underline{d}$ de décalage axial des filets des filetages 6 et 18, la poursuite du vissage du corps d'écrou 4 entraîne le vissage de l'extrémité de la vis dans le filetage auxiliaire 18.

La déformation élastique des moyens de liaison 16 engendre un couple de freinage entre la vis et le filetage auxiliaire 18.

Il est bien entendu qu'un tel effet ne peut être obtenu que si la partie filetée de la vis est suffisamment longue pour que la face avant 8 du corps 4 d'écrou ne soit pas en appui sur la pièce à serrer avant que l'extrémité de la vis ne pénètre par vissage dans le filetage auxiliaire 18.

Il est à noter que dans le mode préféré de réalisation décrit ci-dessus, le corps 4 d'écrou, les moyens de liaison 16 et l'élément de freinage sont venus de matière, ce qui est rendu possible, par exemple, par l'utilisation d'un tour à commande numérique pour usiner intérieurement l'écrou.

En particulier, avec un tel outil, le décalage $\underline{d}$ peut être obtenu en décalant angulairement, dans son plan, le point de départ imposé à l'outil pour obtenir le filetage auxiliaire 18 par rapport au point de départ qui serait imposé à l'outil pour obtenir un filetage qui serait exactement dans le prolongement du filetage 6 du corps 4 d'écrou. Comme on le comprend, un tel décalage angulaire peut être associé avec le décalage axial.

La présente invention permet donc d'obtenir un écrou auto-freiné dont le couple de freinage peut être contrôlé de façon précise par le décalage imposé lors de la fabrication du filetage 6 et du filetage auxiliaire 18, en association avec l'élasticité des moyens de liaison.

**Revendications**

1. Ecrou auto-freiné (2) comportant un corps d'écrou (4) ayant une forme générale de révolution, muni intérieurement d'un filetage (6) comportant au moins un filet et extérieurement des moyens de mise en rotation de l'écrou (10, 12), et des moyens de freinage, caractérisé en ce que les moyens de freinage comprennent un élément de freinage (14) délimitant un filetage auxiliaire (18) coaxial au filetage (6) du corps d'écrou (4), ayant le même nombre de filets et sensiblement le même pas et le même diamètre nominal que celui-ci, et des moyens de liaison (16) élastiquement déformables dans une direction axiale entre l'élément de freinage (14) et le corps d'écrou (4), l'agencement étant tel qu'au repos le prolongement fictif du filetage (6) de corps d'écrou (4) vers le filetage auxiliaire (18) est décalé axialement par rapport à ce dernier, d'une distance (d) différente du quotient du pas des filetages par le nombre de filets de ceux-ci.

2. Ecrou auto-freiné selon la revendication 1, caractérisé en ce que l'élément de freinage (14) est un élément annulaire.

3. Ecrou auto-freiné selon la revendication 1 ou 2, caractérisé en ce que les moyens de liaison (16) comportent un voile dont une partie (22) possède une composante radiale.

4. Ecrou auto-freiné selon la revendication 3, caractérisé en ce que le voile comporte une partie axiale et une partie radiale (22).

5. Ecrou auto-freiné selon l'une quelconque des revendications 1 à 4, caractérisé en ce que le corps d'écrou (4), les moyens de liaison (16) et l'élément de freinage (14) sont venus de matière.

FIG.1

FIG.2

FIG.3

**Office européen des brevets**

# RAPPORT DE RECHERCHE EUROPEENNE

Numero de la demande

EP    91 40 3046

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-C-731 639 (BOOTS LOCK NUT)<br>* page 1, ligne 1 – ligne 14; figure 2 *<br>--- | 1-4 | F16B39/38 |
| A | US-A-2 410 444 (HUELSTER)<br>* colonne 2, ligne 34 – ligne 55; figure 2 *<br>--- | 1,2 | |
| A | GB-A-18 424 /A.D.1914 (GRAY)<br>* page 1, ligne 29 -alinéa 39; revendication 1; figures 1,2 *<br>--- | 1,2 | |
| A | US-A-2 391 902 (HOSKING)<br><br>----- | | |

**DOMAINES TECHNIQUES RECHERCHES (Int. Cl.5)**

F16B

Le présent rapport a été établi pour toutes les revendications

| Lieu de la recherche | Date d'achèvement de la recherche | Examinateur |
|---|---|---|
| BERLIN | 11 FEVRIER 1992 | SCHAEFFLER C.A.A. |